# EUROPÄISCHE PATENTSCHRIFT

(11) **EP 1 249 379 B1**
(45) Veröffentlichungstag und Bekanntmachung des Hinweises auf die Patenterteilung: **02.08.2006**
(21) Anmeldenummer: 02005804.6
(22) Anmeldetag: 14.03.2002
(51) Int. Cl.: B62D 6/00, B62D 1/28, B62D 15/02, B62D 109/00

(54) **Verfahren und Vorrichtung zum Verbringen eines Kraftfahrzeuges in eine Zielposition**
Method and apparatus for moving a motor vehicle to a target position
Méthode et dispositif pour placer un véhicule automobile face à une position ciblée

(30) Priorität: 09.04.2001 DE 10117650
(43) Veröffentlichungstag der Anmeldung: 16.10.2002
(73) Patentinhaber: DaimlerChrysler AG, 70567 Stuttgart (DE)
(72) Erfinder: Hahn, Stefan, 89075 Ulm/Donau (DE); Regensburger, Uwe, 73760 Ostfildern (DE); Schmid, Erwin, 70599 Stuttgart (DE)

(56) Entgegenhaltungen:
- WO-A-92/18879
- DE-A- 19 646 559
- DE-U- 20 102 950
- US-B1- 6 212 452

## Beschreibung

Die Erfindung betrifft ein Verfahren gemäß Oberbegriff des Anspruchs 1 und eine Vorrichtung gemäß Oberbegriff des Anspruchs 7 zum Verbringen eines Kraftfahrzeuges in eine Zielposition, siehe US-A-6 212 452.

Es ist allgemein bekannt, dass herkömmlicherweise Kraftfahrzeuge von bedienenden Personen vom Fahrerplatz aus gesteuert werden. Falls ein beispielsweise auf engem Parkraum abgestelltes bzw. geparktes Kraftfahrzeug in eine andere Parkposition gebracht werden muss, ist es notwendig, dass ein Fahrer das Fahrzeug besteigt, um es in die gewünschte andere Position zu verfahren. Oft ist jedoch an der Einstiegsseite des Kraftfahrzeuges ein bequemes Einsteigen aufgrund eines weiteren geparkten Kraftfahrzeuges nicht oder nur erschwert möglich.

Die gleichen Probleme treten dann auf, wenn der Fahrzeugführen oder seine Mitfahrer das Kraftfahrzeug nach dem Einparken wieder verlassen wollen. In Garagen, Parkhäusern, auf Parkplätzen und öffentlichen Straßen können aufgrund beengter Platzverhältnisse häufig die Türen des eigenen Fahrzeuges nicht weit genug zum bequemen Aussteigen der Fahrzeuginsassen geöffnet werden. Deshalb steigen Fahrgäste häufig vor dem Einparken aus dem Fahrzeug aus, was dem Fahrzeugführer bei der Durchführung eines herkömmlichen Parkvorgangs nicht möglich ist. Dieselben Probleme bestehen auch für das Ausparken aus engen Parklücken, weshalb die Fahrgäste dann erst nach dem erfolgten Ausparken zusteigen.

Zum leichteren Einparken von Kraftfahrzeugen ist beispielsweise die Verwendung eines bordeigenen Parkassistenten bekannt, wie er beispielsweise in der JP-A05002422 beschrieben ist. Ein derartiger Parkassistent unterstützt den Fahrzeugführer beim Einparken dadurch, dass er kontinuierlich errechnete Steuerhinweise an den Fahrzeugführer übermittelt, bei deren Ausführung durch den Fahrzeugführer das Fahrzeug sicher auf einen vorgesehenen Abstellplatz manövriert werden kann. Dazu misst der Parkassistent kontinuierlich mit seinem Messsystem die augenblickliche Position und den Stellwinkel des Fahrzeuges zum Abstellplatz aus. Aus diesen Messwerten generiert ein bordeigener Rechner laufend die Steuerhinweise für den Fahrzeugführer.

Mit einer derartigen Vorrichtung ist es jedoch nicht möglich, dass der Fahrer, der im Fahrzeug sitzend die Steuerhinweise umsetzten muss, in einer engen Parklücke, etwa beim Einparken in Fahrzeuglängsrichtung, dem Fahrzeug bequem entsteigen kann. Ein einfaches "Umparken" oder Rangieren des Kraftfahrzeuges ist mit einer derartigen Vorrichtung nicht möglich.

Der Erfindung liegt somit die Aufgabe zugrunde, ein Verfahren und eine Vorrichtung zum Steuern eines Kraftfahrzeuges zu schaffen, das bzw. die es erlaubt, das Kraftfahrzeug auch bei ungünstigen Parkbedingungen auf komfortable Weise zu parken oder zu verfahren. Darüber hinaus soll dem Fahrzeugführer und/oder den Passagieren stets ein bequemes Aus- und Einsteigen ermöglicht werden.

Diese Aufgabe wird erfindungsgemäß durch die Merkmale der Patentansprüche 1 und 7 gelöst. Weiterbildungen der Erfindung sind in den Unteransprüchen angegeben.

Gemäß Anspruch 1 wird ein Verfahren zum Verbringen eines Kraftfahrzeuges in eine Zielposition angegeben, wobei das Kraftfahrzeug in eine Startposition nahe der angestrebten Zielposition gebracht wird, nach einer ersten fahrerseitiger Aktivierung die Umgebung des Kraftfahrzeuges zur Detektion der Zielposition fortlaufend abgetastet und die aktuelle Fahrzeugposition fortlaufend ermittelt wird, anhand der ermittelten Umgebungs- und Positionsinformationen Steuerinformationen für das Verbringen des Kraftfahrzeuges in die Zielposition ermittelt werden, da nach abhängig von einer zweiten fahrerseitigen Aktivierung von den Steuerinformationen abhängige Steuerbefehle an den Antriebsstrang und/oder die Bremsanlage und/oder die Lenkung des Kraftfahrzeuges abgegeben werden, wodurch das Kraftfahrzeug fahrerunabhängig in die Zielposition fährt.

Gemäß Anspruch 2 kann anhand der ermittelten Umgebungsund/oder Postionsinformationen die angestrebte Zielposition erkannt und eine entsprechende Information an den Fahrer ausgegeben wird.

Gemäß Anspruch 3 können beim Abtasten der Umgebung des Kraftfahrzeuges und bei der Ermittlung der aktuellen Fahrzeugposition dann, wenn ein Hindernis für den Einparkvorgang erfaßt wird, Warninformationen und/oder Informationen über das Hindernis an den Fahrer abgegeben und/oder die zweite fahrerseitige Aktivierung blockiert und/oder der Fahrvorgang in die Zielposition abgebrochen oder unterbrochen werden.

Gemäß Anspruch 4 kann zwischen dem außerhalb des Kraftfahrzeug befindlichen Fahrer und dem Kraftfahrzeug eine Kommunikationsverbindung bestehen, welche zumindest einen fahrerseitigen Aktivierungsbefehl oder dergleichen Steuerbefehl an das Kraftfahrzeug und/oder fahrzeugseitige Informationen an den Fahrer übermittelt.

Gemäß Anspruch 5 kann die Zielposition eine Parklücke, ein Garagenstellplatz oder dergleichen durch die ermittelten Umgebungs- und Positionsinformationen bestimmbarer Bereich sein.

Gemäß Anspruch 6 ist die Startposition eine Parklücke, ein Garagenstellplatz oder dergleicher Bereich und die Zielposition eine Position außerhalb der Startposition sein.

Gemäß Anspruch 7 ist eine Vorrichtung zur Durchführung des vorgenannten Verfahrens angegeben mit einer am Kraftfahrzeug angeordneten Umgebungserfassungseinrichtung zur fortlaufenden Ermittlung der Umgebung des Kraftfahrzeuges und der Zielposition, einer am Kraftfahrzeug angeordneten Positionserfassungseinrichtung zur fortlaufenden Erfassung der Fahrzeugposition, einer ersten auf die Umgebungserfassungseinrichtung und die Positionserfassungseinrichtung wirkende Betätigungseinrichtung zur fahrerseitigen Aktivierung der Umgebungserfassungseinrichtung und der Positionserfassungseinrichtung, einer mit der Umgebungserfassungseinrichtung und der Positionserfassungseinrichtung verbundene Recheneinrichtung zur umgebungs- und fahrzeugpositionsabhängigen Generierung von Steuerinformationen für das Verbringen des Kraftfahrzeuges in die Zielposition, einer mit dem Antriebsstrang und/oder der Bremsamlage und/oder der Lenkung des Kraftfahrzeuges verbundenen Steuereinrichtung zur steuerinformationsabhängigen Beeinflussung des Antriebsstrangs und/oder der Bremsamlage und/oder der Lenkung des Kraftfahrzeuges derart, daß das Kraftfahrzeug fahrerunabhängig in die Zielposition fährt, wobei eine zweite Betätigungseinrichtung mit der Steuereinrichtung zur fahrerseitigen Aktivierung der Steuereinrichtung in Kontakt steht, um Befehle an Antriebsstrangs und/oder die Bremsanlage und/oder die Leukung abzugeben.

Gemäß Anspruch 8 kann zumindest die erste Betätigungseinrichtung am Kraftfahrzeug angeordnet sein.

Gemäß Anspruch 9 kann zumindest die zweite Betätigungseinrichtung an einer Sendeeinrichtung angeordnet sein, welche mit einer mit der Steuereinrichtung verbundenen Empfangseinrichtung in Kommunikationsverbindung steht.

Gemäß Anspruch 10 kann die Umgebungserfassungseinrichtung und/oder die Positionserfassungseinrichtung eine Kameraanodnung, eine Laserscanneranordnung, eine Ultraschallsensoranordnung, eine Radarsensoranordnung oder dergleichen Umgebungserfassungssensorik aufweisen.

Gemäß Anspruch 11 kann die Positionserfassungseinrichtung eine satellitengestützte GPS-Positionserkennung zur Erkennung der Start- und Zielposition und der aktuellen Position aufweisen.

Gemäß Anspruch 12 kann am Kraftfahrzeug und/oder an der Sendeeinrichtung eine Notfall-Abbrucheinrichtung zum fahrerseitigen Abbrechen oder Unterbrechen des Fahrvorganges in die Zielposition angeordnet sein.

Anhand der Zeichnung wird nachstehend ein Ausführungsbeispiel der Erfindung näher erläutert.

Es zeigen:
Fig.1 einen Einparkvorgang quer zur Fahrtrichtung;
Fig.2 einen Einparkvorgang parallel zur Fahrtrichtung; und
Fig. 3 eine Vorrichtung zur Durchführung eines Parkvorganges.

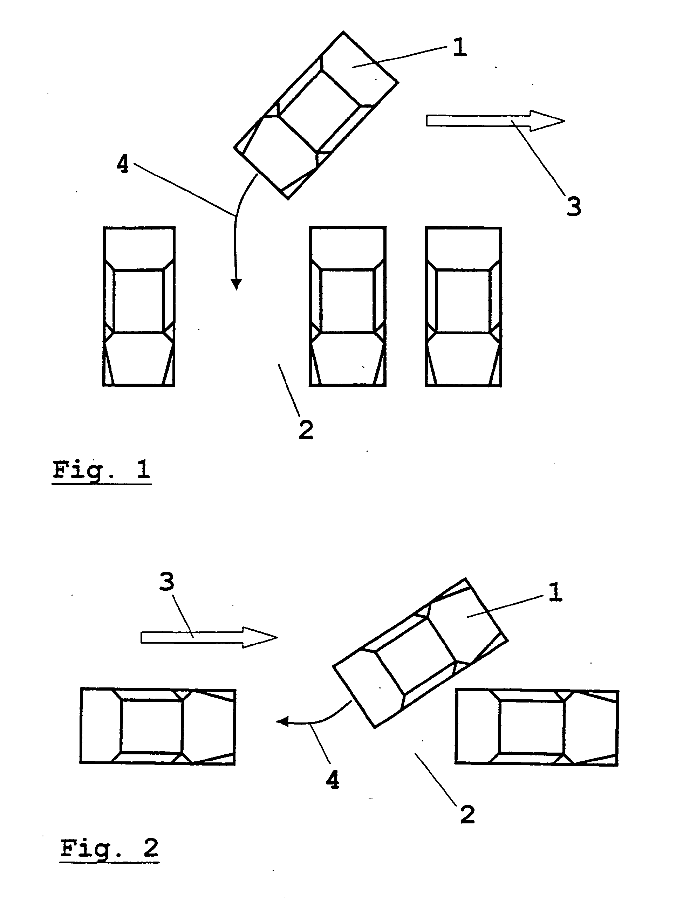

In dem in Fig.1 gezeigten Einparkvorgang wird das zu parkende Fahrzeug 1 vom Fahrzeugführer vor der angefahrenen Parklücke 2 auf einer Startposition abgestellt. Die Parklücke 2 erstreckt sich quer zur Hauptfahrrichtung 3.

Eine optimale Startposition für den Einparkvorgang ist für ein etwa mittig und parallel zur Längsrichtung der Parklücke abgestelltes Fahrzeug gegeben, in der das vollständige Öffnen der Fahrzeugtüren problemlos möglich ist. Das Fahrzeug 1 kann dabei mit dem Bug oder mit dem Heck zum Vorwärts- oder Rückwärtseinparken vor der Parklücke 2 abgestellt sein.

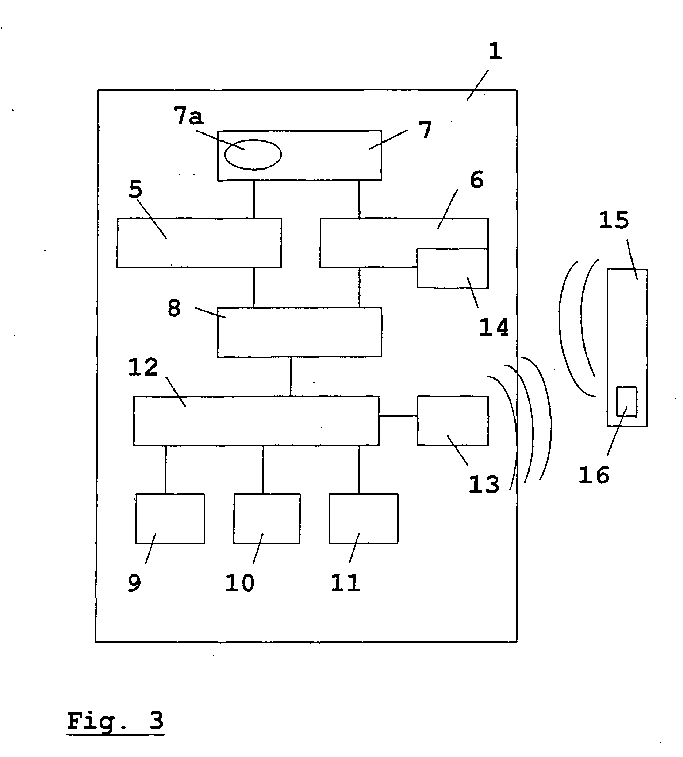

Das erfindungsgemäße Verfahren ermöglicht aber auch das Einparken von Fahrzeugen, die einen Einparkvorgang von einer weniger optimalen Startposition aus beginnen. Hierzu überprüft die in Figur 3 gezeigte Park- und Rangiereinrichtung mit der Umgebungssensorik 5 die Parksituation und signalisiert, ob der Parkvorgang einleitet werden kann oder ob Hindernisse einen Parkvorgang behindern.

Der noch im Fahrzeug befindliche Fahrzeugführer aktiviert mittels der in Figur 3 gezeigten Betätigungseinrichtung 7 die Park- und Rangiereinrichtung und erhält von der Park- und Rangiereinrichtung über eine Ausgabevorrichtung 7a optische und/oder akustische Informationen darüber, ob der Parkvorgang ausgeführt werden kann. Dazu wird die Umgebung des Fahrzeugs - zumindest der Bereich vor oder hinter dem Fahrzeug - von der Park- und Rangiereinrichtung mittels geeigneter Umgebungssensoren 5 analysiert, die beispielsweise eine 3D-Information über die Umgebung generieren. Dabei wird im internen Rechner 8 der Park- und Rangiereinrichtung überprüft, ob eine sichere Soll-Trajektorie 4, d.h. ein geeigneter, geplanter Fahrweg für das Fahrzeug zum Starten des Einparkvorgang generierbar ist.

Falls die Park- und Rangiereinrichtung nach erfolgter Überprüfung der Parksituation aufgrund erkannter Hindernisse keine Bestätigung zur möglichen erfolgreichen Durchführung eines Park- oder Rangiervorganges signalisieren, so wird über die Ausgabevorrichtung 7a auf die Ursache für den Abbruch des Parkoder Rangiervorganges hingewiesen.

Optional kann bei der Überprüfung der Park- oder Rangiersituation auch die Möglichkeit des Öffnens der Türen in der Startposition von der Park- und Rangiereinrichtung überprüft werden und eine allgemeine oder eine auf die jeweilige Tür bezogene Fehlermeldung generiert werden, wenn die Park- und Rangiereinrichtung erkennt, dass auf der angefahrenen Startposition aus Platzgründen eine oder mehrere Türen nicht vollständig geöffnet werden können.

Wird von der Park- und Rangiereinrichtung die Möglichkeit zum Durchführen des gewünschten Park- oder Rangiervorganges signalisiert, so können gegebenenfalls vorhandene Fahrgäste und der Fahrzeugführer das Fahrzeug verlassen. Vor dieser Signalisierung hat die Park- und Rangiereinrichtung das Fahrzeug in einen sicheren Zustand gebracht. Im Ausführungsbeispiel wird der sichere Zustand beispielsweise durch Betätigen der Bremse 10 erreicht. Eine Betätigung der Feststellbremse oder der Übergang in den Leerlaufbetrieb für Automatikgetriebe ist dafür nicht zwingend notwendig.

Der Fahrzeugführer startet nach dem Aussteigen den weiteren Park- oder Rangiervorgang mittels einer Sendeeinrichtung 15, die z.b. in den Fahrzeugschlüssel integriert ist und vorzugsweise die Funktion des Schlüssels mit übernimmt. Anstelle der Sendeeinrichtung können auch geeignete andere Kommunikationseinrichtungen verwendet werden, z.b. ein Mobiltelefon mit dem die Park- und Rangiereinrichtung den weiteren Park- oder Rangiervorgang über einen speziellen Zahlencode und/oder per Spracheingabe startet. Der Park- oder Rangiervorgang wird dann von der Park- und Rangiereinrichtung selbsttätig ausgeführt.

Dazu ermittelt die Recheneinheit 8 kontinuierlich mittels der Umgebungssensorik 5 eine lokale digitale Karte der Umgebung des Fahrzeugs. So ist zum Beispiel die Sensorik des Ausführungsbeispieles als ein Laserscanner ausgeführt, der die Generierung einer 3D-Karte der Umgebung des Fahrzeuges ermöglicht. Alternativ dazu können z.B. mehrere zusammenwirkende Laser, eine Stereobildverarbeitung und Entfernungsbildkameras zur Abbildung der Umgebung verwendet werden. Jede Art von Umgebungssensorik ist geeignet, die es ermöglicht, die Umgebungs- bzw. Park- und Rangiersituation in geeigneter Weise zu erfassen.

Die aktuelle Fahrzeugposition in dieser Umgebung wird von der Park- und Rangiereinrichtung aus der messtechnischen Erfassung von Raddrehzahlen, Lenk- und Gierwinkel und aus der Messung von Abständen zu Objekten in der Umgebung errechnet. Aus der in der generierten Karte bekannten, aktuellen Fahrzeugposition und einer aus der Karte ermittelbaren Zielposition in der Parklücke wird von der Park- und Rangiereinrichtung die Soll-Trajektorie 4 errechnet, die laufend aktualisiert wird.

Zum Abfahren der Soll-Trajektorie generiert die Park- und Rangiereinrichtung mit Hilfe einer Steuereeirichtung 12 geeignete Steuerbefehle für Stellglieder im Fahrzeug, mit denen kontinuierlich auf die Lenkung 9 und den Antriebsstrang 11 eingewirkt wird. Dabei kann zur Erreichung der Zielposition auch selbsttätig ein Wechsel zwischen Vorwärts- und Rückwärtsfahrt bewirkt werden und es können zusätzlich die notwendigen Lenkungs- und Bremsmanöver ausgeführt werden.

Bei Erreichen der Zielposition wird das Fahrzeug von der Parkund Rangiereinrichtung selbsttätig gestoppt; es wird die Bremse 10 betätigt, gegebenenfalls die "P"-Position eines Automatikgetriebes eingestellt oder zur Sicherung ein Fahrgang eingelegt und sämtliche Aggregate abgeschaltet. Auf der Sendeeinrichtung 15 wird dem Fahrzeugführer der erfolgreiche Abschluss des Parkoder Rangiervorganges signalisiert.

Die Fernbedienung 15 des Ausführungsbeispieles ist so ausgebildet, dass der selbsttätige Park- oder Rangiervorgang nur dann aufrechterhalten bleibt, solange der Fahrzeugführer Kontakt mit dem Fahrzeug hält, z.B. durch Drücken einer Park- oder Rangiertaste 16 an der Sendeeinrichtung. Wird die Taste freigegeben, z.b. wegen einer Unachtsamkeit des Fahrzeugführers oder weil der Fahrzeugführer die Sendeeinrichtung versehentlich fallen gelassen hat, so wird der Park- oder Rangiervorgang von der Park- und Rangiereinrichtung sofort unterbrochen und das Fahrzeug wird selbsttätig gestoppt.

Weiterhin ist in die Park- und Rangiereinrichtung des Ausführungsbeispieles eine (nicht gezeigte) Parkhilfe integriert, die z.B. auf den heute dazu üblicherweise verwendeten Ultraschallsensoren basiert. Diese Parkhilfen warnen bekannterweise den Fahrer dann, wenn sie ein Hindernis erfassen. Integriert in die erfindungsgemäße Lösung wirkt die Parkhilfe mit dieser Funktion als Super-Kontroller über den Fahrzeugführer und die Steuervorrichtung. Das Warnsignal der Parkhilfe wird dabei zum Abbremsen des Fahrzeuges verwendet. Die Integration ist für die erfindungsgemäße Lösung optional und es kann auch darauf verzichtet werden.

Zum Ausparken aus einer Parklücke aktiviert der Fahrzeugführer von außerhalb des Fahrzeuges die Park- und Rangiereinrichtung, die mit den vorangehend beschriebenen Mitteln zur messtechnischen Erfassung der Umgebung in der lokalen Karte eine zum Einsteigen geeignete Zielposition außerhalb der Parklücke und aus der ermittelten, aktuellen Fahrzeug-Position eine Soll-Trajektorie zum Anfahren dieser Zielposition festlegt.

Die Park- und Rangiereinrichtung startet das Fahrzeug nach einer Signalisierung der erfolgreichen Einleitung des Ausparkvorganges und steuert es selbsttätig wie vorangehend für den Einparkvorgang beschrieben durch ein Abfahren der ermittelten Soll-Trajektorie auf die Zielposition. Dort können die Fahrgäste und der Fahrzeugführer in das dann zu entriegelnde Fahrzeug einsteigen und die Park- und Rangiereinrichtung kann deaktiviert werden.

Beim Ausparkvorgang kann ebenfalls die integrierte Parkhilfe bei Hindernissen den Parkvorgang unterbrechen und es erfolgt auch hier eine Unterbrechung, wenn kein Kontakt zwischen Sendeeinrichtung 15 und Steuervorrichtung 12 besteht, wie dies etwa bei einem Loslassen der Aktivierungstaste 16 auf der Sendeeinrichtung 15 der Fall sein kann. Auch beim Ausparken ist die zusätzliche Verwendung der Parkhilfe optional und nicht zwingend notwendig für die erfindungsgemäße Lösung.

Bei dem in Fig.2 gezeigten Einparkvorgang wird das parkende Fahrzeug 1 vom Fahrzeugführer vor der angefahrenen Parklücke 2 abgestellt, die sich parallel zur Hauptfahrrichtung 3 erstreckt. Diese Parksituation findet sich insbesondere in Parkbuchten oder bei in Reihe am Straßenrand angeordneten Stellplätzen..

Optimale Abstellpositionen für diesen Einparkvorgang befinden sich seitlich vor dem Beginn oder hinter dem Ende der Parklücke, auf denen das Fahrzeug 1 mit seiner Längsachse in etwa im spitzen Winkel zur Längsachse der Parklücke 2 steht und sich dabei die Fahrzeugtüren gut öffnen lassen.

Die Ein- und Ausparkvorgänge für eine derartige Parklücke entsprechen ansonsten in allen Merkmalen den vorangehend zu Fig.1 beschriebenen Parkvorgängen.

Das Grundfunktionsprinzip sowohl der dargestellten Ausführungsform als auch weiterer Ausführungsformen der Erfindung besteht darin, dass das Kraftfahrzeug 1 unter Verwendung der bordeigenen Park- und Rangiereinrichtung gesteuert wird. Die Park- und Rangiereinrichtung misst kontinuierlich die Umgebung des Fahrzeugs mittele der Sensorik 5 und die aktuelle Fahrzeugposition mittels der Positionserfassungseinrichtung 6 und ermittelt daraus mit dem bordeigenen Rechner 8 Steuerinformationen für das Parken oder Rangieren. Nachdem die Park- und Rangiereinrichtung auf einer von dem Fahrzeug 1 eingenommenen Startposition eine Freigabe für den Park- oder Rangiervorgang auf der Anzeige 7a signalisiert hat, aktiviert der Fahrzeugführer mittels einer Sendeeinrichtung 15 durch das Drücken einer Park- oder Rangiertaste 16 die Park- und Rangiereinrichtung von außerhalb des Fahrzeugs. Daraufhin ermittelt die Park- und Rangiereinrichtung aus ermittelten Messwerten zur Umgebung und zur aktuellen Fahrzeugposition Steuerbefehle für Stellglieder des Fahrzeugs 1, über die sie auf den Antriebsstrang 11 und die Lenkung 9 des Fahrzeugs zum Abfahren einer an Bord errechneten Soll-Trajektorie 4 so einwirkt, dass das Fahrzeug 1 zum Ein- oder Ausparken selbsttätig auf die Zielposition fährt.

Der Fahrzeugführer kann bei Gefahr durch ein Freigeben der gedrückten Park- oder Rangiertaste 16 den Park- oder Rangiervorgang sofort unterbrechen.

Die Fahrzeugumgebung kann zusätzlich von einer (nicht gezeigte) Parkhilfe auf Hindernisse überwacht werden und bei Kollisionsgefahr kann der Park- oder Rangiervorgang übergeordnet von der Parkhilfe unterbrochen werden.

Die Park- und Rangiereinrichtung kann bei einer ungeeigneten Park- oder Rangiersituation dem Fahrzeugführer Informationen über die Gründe für die Nicht-Eignung auf der Anzeige 7a übermitteln.

Die Sensorik 5 kann z.b. als Laserscanner ausgebildet sein.

Die Vorrichtung kann mit einer Sendeeinrichtung 15 von außerhalb des Fahrzeugs 1 aktivier- und deaktivierbar sein.

Die erfindungsgemäße Lösung beruht zusammenfassed darauf, dass der Fahrzeugführer das Kraftfahrzeug 1 beim Einparken beispielsweise vor einer gewählten Parklücke oder Garagenzufahrt abstellt und das abgestellte Fahrzeug vor dem Start des Einparkvorganges verlässt. Der Fahrzeugführer aktiviert mit einer Sendeeinrichtung 15 dann die Park- und Rangiereinrichtung im Fahrzeug, die vollkommen selbsttätig das Fahrzeug mittels gemessener Positions- und Umgebungsdaten und daraus errechneter Steuerbefehle über die entsprechenden Antriebs- und Lenkungsstellglieder in die Parklücke zu der vorgesehenen Zielposition steuert und dort sicher abstellt.

Auch ist es mit der erfindungsgemäßen Lösung möglich, das Fahrzeug aus einer Parkposition in eine andere Parkposition zu verfahren. Hierzu wird der Steuervorgang von außerhalb des Kraftfahrzeuges ausgelöst. Das Fahrzeug verfährt daraufhin mittels der gemessenen Positions- und Umgebungsdaten und der daraus errechneten Steuerbefehle über entsprechende Antriebsund Lenkungsstellglieder selbsttätig in die vorgesehene Zielposition.

Entsprechend ist auch ein selbsttätiges Ausparken aus einer Parklücke über die Sendeeinrichtung möglich, bei welcher der Fahrzeugführer erst nach erfolgreichen Ausparken aus der Parklücke in das Fahrzeug einsteigt.

## Patentansprüche

1. Verfahren zum Verbringen eines Kraftfahrzeuges in eine Zielposition, wobei
das Kraftfahrzeug in eine Startposition nahe der angestrebten Zielposition gebracht wird,
nach einer ersten fahrerseitiger Aktivierung die Umgebung des Kraftfahrzeuges zur Detektion der Zielposition fortlaufend abgetastet und die aktuelle Fahrzeugposition fortlaufend ermittelt wird und
anhand der ermittelten Umgebungs- und Positionsinformationen Steuerinformationen für das Verbringen des Kraftfahrzeuges in die Zielposition ermittelt werden, **dadurch gekennzeichnet, daß** danach abhängig von einer zweiten fahrerseitigen Aktivierung von den Steuerinformationen abhängige Steuerbefehle an den Antriebsstrang und/oder die Bremsanlage und/oder die Lenkung des Kraftfahrzeuges abgegeben werden, wodurch das Kraftfahrzeug fahrerunabhängig in die Zielposition fährt.

2. Verfahren nach Anspruch 1,
**dadurch gekennzeichnet, daß** anhand der ermittelten Umgebungs- und/oder Postionsinformationen die angestrebte Zielposition erkannt und eine entsprechende Information an den Fahrer ausgegeben wird.

3. Verfahren nach Anspruch 1 oder 2,
**dadurch gekennzeichnet, daß** beim Abtasten der Umgebung des Kraftfahrzeuges und bei der Ermittlung der aktuellen Fahrzeugposition dann, wenn ein Hindernis für den Einparkvorgang erfaßt wird, Warninformationen und/oder Informationen über das Hindernis an den Fahrer abgegeben und/oder die zweite fahrerseitige Aktivierung blockiert und/oder der Fahrvorgang in die Zielposition abgebrochen oder unterbrochen wird.

4. Verfahren nach einem der Ansprüche 1 bis 3,
**dadurch gekennzeichnet, daß** zwischen dem außerhalb des Kraftfahrzeug befindlichen Fahrer und dem Kraftfahrzeug eine Kommunikationsverbindung besteht, welche zumindest einen fahrerseitigen Aktivierungsbehehl oder dergleichen Steuerbefehl an das Kraftfahrzeug und/oder fahrzeugseitige Informationen an den Fahrer übermittelt.

5. Verfahren nach einem der Ansprüche 1 bis 4,
**dadurch gekennzeichnet, daß** die Zielposition eine Parklücke, ein Garagenstellplatz oder dergleichen durch die ermittelten Umgebungs- und Positionsinformationen bestimmbarer Bereich ist.

6. Verfahren nach einem der Ansprüche 1 bis 4,
**dadurch gekennzeichnet, daß** die Startposition eine Parklücke, ein Garagenstellplatz oder dergleichen Bereich ist und die Zielposition eine Position außerhalb der Startposition ist.

7. Vorrichtung zur Durchführung des Verfahrens nach Anspruch 1 mit
einer am Kraftfahrzeug (1) angeordneten Umgebungserfassungseinrichtung (5) zur fortlaufenden Ermittlung der Umgebung des Kraftfahrzeuges und der Zielposition,
einer am Kraftfahrzeug angeordneten Positionserfassungseinrichtung (6) zur fortlaufenden Erfassung der Fahrzeugposition,
einer ersten auf die Umgebungserfassungseinrichtung (5) und die Positionserfassungseinrichtung (6) wirkende Betätigungseinrichtung (7) zur fahrerseitigen Aktivierung der Umgebungserfassungseinrichtung (5) und der Positionserfassungseinrichtung (6),
einer mit der Umgebungserfassungseinrichtung (5) und der Positionserfassungseinrichtung (6) verbundene Recheneinrichtung (8) zur umgebungs- und fahrzeugpositionsabhängigen Generierung von Steuerinformationen für das Verbringen des Kraftfahrzeuges in die Zielposition und
einer mit dem Antriebsstrang (11) und/oder der Bremsamlage (10) und/oder der Lenkung (9) des Kraftfahrzeuges verbundenen Steuereinrichtung (12) zur steuerinformationsabhängigen Beeinflussung des Antriebsstrangs (11) und/oder der Bremsamlage (10) und/oder der Lenkung (9) des Kraftfahrzeuges derart, daß das Kraftfahrzeug (1) fahrerunabhängig in die Zielposition fährt, **dadurch gekennzeichnet, daß** eine zweite Betätigungseinrichtung (16) mit der Steuereinrichtung (12) zur fahrerseitigen Aktivierung der Steuereinrichtung (12) in Kontakt steht, um Befehle an den Antriebstrang (11) und/oder die Bremsanlage (10) und/oder die Leukung (9) abzugeben.

8. Vorrichtung nach Anspruch 7,
**dadurch gekennzeichnet, daß** zumindest die erste Betätigungseinrichtung (7) am Kraftfahrzeug (1) angeordent ist.

9. Vorrichtung nach Anspruch 7 oder 8,
**dadurch gekennzeichnet, daß** zumindest die zweite Betätigungseinrichtung (16) an einer Sendeeinrichtung (15) angeordnet ist, welche mit einer mit der Steuereinrichtung (12) verbundenen Empfangseinrichtung (13)in Kommunikationsverbindung steht.

10. Vorrichtung nach einem der Ansprüche 7 bis 9,
**dadurch gekennzeichnet, daß** die Umgebungserfassungseinrichtung (5) und/oder die Positionserfassungseinrichtung (6) eine Kameraanodnung, eine Laserscanneranordnung, eine Ultraschallsensoranordnung, eine Radarsensoranordnung oder dergleichen Umgebungserfassungssensorik (5) aufweist.

11. Vorrichtung nach einem der Ansprüche 7 bis 10,
**dadurch gekennzeichnet, daß** die Positionserfassungseinrichtung (6) eine satellitengestützte GPS-Positionserkennung (14) zur Erkennung der Start- und Zielposition und der aktuellen Position aufweist.

12. Vorrichtung nach einem der Ansprüche 7 bis 11,
**dadurch gekennzeichnet, daß** am Kraftfahrzeug (1) und/oder an der Sendeeinrichtung (15) eine Notfall-Abbrucheinrichtung zum fahrerseitigen Abbrechen oder Unterbrechen des Fahrvorganges in die Zielposition angeordnet ist.

## Claims

1. Method for moving a motor vehicle into a target position,
the motor vehicle being brought into a starting position near the desired target position,
after a first activation by the driver, the surroundings of the motor vehicle being continuously scanned for detection of the target position and the current position of the vehicle being continuously determined and
control information for moving the motor vehicle into the target position being determined on the basis of the information determined concerning the surroundings and the position, **characterized in that**, after that, depending on a second activation by the driver, control commands that are dependent on the control information are emitted to the drive train and/or the brake system and/or the steering of the motor vehicle, whereby the motor vehicle moves into the target position independently of the driver.

2. Method according to Claim 1, **characterized in that** the desired target position is detected on the basis of the information determined concerning the surroundings and/or the position and corresponding information is output to the driver.

3. Method according to Claim 1 or 2, **characterized in that**, when scanning the surroundings of the motor vehicle and when determining the current position of the vehicle, whenever an obstacle to the parking operation is sensed, warning information and/or information on the obstacle is issued to the driver and/or the second activation by the driver is blocked and/or the operation of moving into the target position is abnormally terminated or interrupted.

4. Method according to one of Claims 1 to 3, **characterized in that** between the driver, located outside the motor vehicle, and the motor vehicle there is a communications connection, which transmits at least one activation command by the driver or similar control command to the motor vehicle and/or information from the vehicle to the driver.

5. Method according to one of Claims 1 to 4, **characterized in that** the target position is a parking space, a garage parking place or a similar area that can be determined by the information determined concerning the surroundings and the position.

6. Method according to one of Claims 1 to 4, **characterized in that** the starting position is a parking space, a garage parking place or a similar area and the target position is a position outside the starting position.

7. Apparatus for carrying out the method according to Claim 1, with
a surroundings sensing device (5), arranged on the motor vehicle (1), for continuously determining the surroundings of the motor vehicle and the target position,
a position sensing device (6), arranged on the motor vehicle, for continuously sensing the position of the vehicle,
a first actuating device (7), acting on the surroundings sensing device (5) and the position sensing device (6), for the activation by the driver of the surroundings sensing device (5) and the position sensing device (6),
a computing device (8), connected to the surroundings sensing device (5) and the position sensing device (6), for generating in a way dependent on the surroundings and the position of the vehicle control information for moving the motor vehicle into the target position and
a control device (12), connected to the drive train (11) and/or the brake system (10) and/or the steering (9) of the motor vehicle, for influencing the drive train (11) and/or the brake system (10) and/or the steering (9) of the motor vehicle in a way dependent on the control information such that the motor vehicle (1) moves into the target position independently of the driver, **characterized in that** a second actuating device (16) is in contact with the control device (12) for the activation by the driver of the control device (12) in order to issue commands to the drive train (11) and/or the brake system (10) and/or the steering (9).

8. Apparatus according to Claim 7, **characterized in that** at least the first actuating device (7) is arranged on the motor vehicle (1).

9. Apparatus according to Claim 7 or 8, **characterized in that** at least the second actuating device (16) is arranged on a transmitting device (15), which is in communications connection with a receiving device (13) connected to the control device (12).

10. Apparatus according to one of Claims 7 to 9, **characterized in that** the surroundings sensing device (5) and/or the position sensing device (6) has a camera arrangement, a laser scanner arrangement, an ultrasonic sensor arrangement, a radar sensor arrangement or similar surroundings sensing equipment (5).

11. Apparatus according to one of Claims 7 to 10, **characterized in that** the position sensing device (6) has a satellite-aided GPS position detection (14) for detecting the starting position and target position and the current position.

12. Apparatus according to one of Claims 7 to 11, **characterized in that** an emergency aborting device is arranged on the motor vehicle (1) and/or on the transmitting device (15) for the driver to abnormally terminate or interrupt the operation of moving into the target position.

## Revendications

1. Procédé pour placer un véhicule automobile face à une position ciblée, le véhicule automobile étant placé en une position de départ à proximité de la position ciblée souhaitée, l'environnement du véhicule automobile étant balayé en permanence, suite à une première activation effectuée par le conducteur, en vue de la détection de ladite position ciblée, la position actuelle du véhicule automobile étant déterminée en permanence, et des informations de commande destinées au placement du véhicule automobile en la position ciblée étant déterminées à l'aide des informations concernant l'environnement et la position, **caractérisé en ce que** par la suite et en fonction d'une deuxième activation effectuée par le conducteur, des informations de pilotage dépendant des informations de commande sont envoyées à la cinématique de transmission et/ou au système de freinage et/ou à la direction du véhicule automobile, ce dernier se plaçant alors en la position ciblée, sans que le conducteur n'ait à faire quoique ce soit.

2. Procédé selon la revendication 1, **caractérisé en ce que** la position ciblée souhaitée est détectée à l'aide des informations saisies concernant l'environnement et/ou la position et qu'une information spécifique est envoyée au conducteur.

3. Procédé selon la revendication 1 ou 2, **caractérisé en ce que** lors du balayage de l'environnement du véhicule automobile et lors de la transmission de la position actuelle du véhicule automobile, des informations d'avertissement et/ou des informations concernant l'obstacle sont envoyées au conducteur et/ou que la deuxième activation par le conducteur est bloquée et/ou que la marche du véhicule automobile en la position ciblée est arrêtée ou interrompue, lorsqu'un obstacle entravant le stationnement est saisi.

4. Procédé selon l'une quelconque des revendications 1 à 3, **caractérisé en ce qu'**il existe une liaison de communication entre le conducteur se trouvant à l'extérieur du véhicule automobile et le véhicule automobile lui-même, ladite liaison transmettant une commande d'activation au moins effectuée par le conducteur ou une commande de pilotage au véhicule automobile et/ou des informations concernant le véhicule au conducteur.

5. Procédé selon l'une quelconque des revendications 1 à 4, **caractérisé en ce que** la position ciblée est une place libre, une place de stationnement dans un garage ou tout espace pouvant être déterminé par les informations saisies en matière d'environnement et de position.

6. Procédé selon l'une quelconque des revendications 1 à 4, **caractérisé en ce que** la position de départ est une place libre, une place de stationnement dans un garage ou tout espace similaire et que la position ciblée est une position à l'extérieur de la position de départ.

7. Dispositif pour mettre en oeuvre le procédé selon la revendication 1, comportant un dispositif de saisie de l'environnement (5) installé sur le véhicule automobile (1) et destiné à la saisie continue de l'environnement du véhicule automobile et de la position ciblée, un dispositif de saisie de la position (6) installé sur le véhicule automobile et destiné à la saisie continue de la position dudit véhicule automobile, une première commande (7) agissant sur le dispositif de saisie de l'environnement (5) et sur le dispositif de saisie de la position (6) et destinée à l'activation par le conducteur dudit dispositif de saisie de l'environnement (5) et dudit dispositif de saisie de la position (6), un organe de calcul (8) raccordé au dispositif de saisie de l'environnement (5) et au dispositif de saisie de la position (6) et destiné à la génération d'informations de commande dépendant de l'environnement et de la position du véhicule automobile dans le but de placer le véhicule automobile face à la position ciblée, et une unité de contrôle (12) reliée à la cinématique de transmission (11) et/ou au système de freinage (10) et/ou à la direction (9) du véhicule automobile et destinée à influencer ladite cinématique de transmission (11) et/ou ledit système de freinage (10) et/ou ladite direction (9) du véhicule automobile, cette influence dépendant des informations de commande, de telle sorte que le véhicule automobile (1) se place face à la position ciblée sans influence quelconque du conducteur, **caractérisé en ce qu'**une deuxième commande (16) est en contact avec l'unité de contrôle (12) pour l'activation de ladite unité de contrôle (12) par le conducteur, en vue de fournir des commandes à la cinématique de transmission (11) et/ou au système de freinage (10) et/ou à la direction (9).

8. Dispositif selon la revendication 7, **caractérisé en ce que** la première commande (7) au moins est disposée sur le véhicule automobile (1).

9. Dispositif selon la revendication 7 ou 8, **caractérisé en ce que** la deuxième commande (16) au moins est disposée sur un dispositif émetteur (15) qui est en communication avec un dispositif récepteur (13) relié à l'unité de contrôle (12).

10. Dispositif selon l'une quelconque des revendications 7 à 9, **caractérisé en ce que** le dispositif de saisie de l'environnement (5) et/ou le dispositif de saisie de la position (6) comprend une caméra, un scanner laser, un dispositif à ultrasons, un dispositif palpeur radar ou une technique sensorielle de saisie de l'environnement similaire (5).

11. Dispositif selon l'une quelconque des revendications 7 à 10, **caractérisé en ce que** le dispositif de saisie de la position (6) comprend une identification de la position par GPS (14) assistée par satellites, destinée à l'identification de la position de départ et de la position ciblée, et de la position actuelle.

12. Dispositif selon l'une quelconque des revendications 7 à 11, **caractérisé en ce qu'**un dispositif d'arrêt d'urgence est disposé sur le véhicule automobile (1) et/ou sur le dispositif émetteur (15) en vue de l'arrêt ou de l'interruption par le conducteur de la marche du véhicule en la position ciblée.
